# EUROPÄISCHE PATENTSCHRIFT

(11) **EP 2 981 584 B1**
(45) Veröffentlichungstag und Bekanntmachung des Hinweises auf die Patenterteilung: **14.04.2021**
(21) Anmeldenummer: 14719609.1
(22) Anmeldetag: 21.03.2014
(51) Int. Cl.: C09J 4/00, C08F 220/10, C08G 59/00, C09J 163/00

(54) **KUNSTHARZ-VERKLEBUNGSMITTEL MIT BIOGENEN REAKTIVEN VERDÜNNERN UND HARZEN**
SYNTHETIC-RESIN ADHESIVE HAVING BIOGENIC REACTIVE DILUENTS AND RESINS
ADHÉSIF À BASE DE RÉSINE SYNTHÉTIQUE COMPORTANT DES DILUANTS RÉACTIFS ET DES RÉSINES BIOGÈNES

(30) Priorität: 05.04.2013 DE 102013103399
(43) Veröffentlichungstag der Anmeldung: 10.02.2016
(73) Patentinhaber: fischerwerke GmbH & Co. KG, 72178 Waldachtal (DE)
(72) Erfinder: GRÜN, Jürgen, 79268 Bötzingen (DE); VOGEL, Martin, 79286 Glottertal (DE); SCHLENK, Christian, 79211 Denzlingen (DE); WEINELT, Christian, 79312 Emmendingen (DE)
(86) Internationale Anmeldenummer: PCT/EP2014/000774
(87) Internationale Veröffentlichungsnummer: WO 2015/018466

(56) Entgegenhaltungen:
- WO-A1-2005/056659
- WO-A2-2012/064717
- CN-A- 103 013 411
- KR-B1- 100 822 290
- US-A1- 2001 035 111
- US-A1- 2007 119 745
- US-A1- 2012 247 985

## Beschreibung

Die Erfindung betrifft mehrkomponentige Kunstharz-Verklebungsmittels zum Einmörteln von einem Verankerungselement in einem Loch oder Spalt, wobei das Kunstharz-Verklebungsmittel und ein Verankerungsmittel in ein Loch oder einen Spalt, auch in einem rissigen Substrat, wie rissigem Beton, eingebracht werden und das Kunstharz-Verklebungsmittel zum Aushärten gebracht wird, wobei das Kunstharz-Verklebungsmittel reaktive Verdünner und/oder Harze umfasst, und wobei der reaktive Verdünner und/oder das reaktive Harz mindestens einen reaktiven Verdünner und/oder ein reaktives Harz, der bzw. das biogen ist oder einen biogenen Anteil aufweist, beinhaltet, ausgewählt aus epoxidiertem Sojabohnenöl(meth)acrylat, 1,10-Decandioldi(meth)acrylat, Tetrahydrofurfurylmethacrylat, Isobornylmethacrylat, Sorbitol(meth)acrylat, (meth)acryliertem Fuselöl, rein biogenem Glycerintri(meth)acrylat oder Glycerinmethacrylat, bei dem mindestens der (Meth)acrylatanteil biogen ist, und Gemischen von zwei oder mehrerer solcher mindestens teilweise biogener reaktiver Verdünner und/oder Harze,
wobei biogen, ein biogener Anteil oder mindestens teilweise biogen bedeutet, dass die reaktiven Verdünner oder diejenigen "mit biogenem Anteil" mindestens mit Teilen ihrer Moleküle aus Pflanzen oder pflanzlichen oder tierischen Materialien gewonnen werden, was anhand der ASTM6866 über den 14C-Gehalt nachgewiesen werden kann;
sowie dieser Erfindung untergeordnete Verwendungen wie in jeweils einem der Ansprüche 2 bis 14, die als Bestandteil der Beschreibung anzusehen sind.

Es sind eine Vielzahl von (z.B. Injektions-)Befestigungsmörtelsystemen (Kunstharz-Verklebungsmittel) auf Basis verschiedenster polymerbildender Komponenten bekannt, die, mal als Ein-, mal als Zwei- oder Mehrkomponentensysteme ausgebildet, dem Einmörteln von Verankerungsmitteln wie Bolzen, Ankerstangen oder dergleichen in Löchern, wie Bohrlöchern, oder Spalten, jeweils in festen Untergründen wie z.B. Mauerwerk oder Beton, dienen. An den Verankerungsmitteln können dann weitere Bau-teile befestigt werden, z.B. Verkleidungselemente. Das Einmörteln der Verankerungsmittel beruht dabei zum einen auf Klebeeffekten im Sinne eines Stoffschlusses zwischen dem Kunstharz und einem Verankerungselement und/oder der benetzten Fläche des Loches oder Spaltes, und/oder zum anderen auf Formschluss, wie beispielsweise Hinterschneidungen durch Umgeben mittels des Kunst-mörtels von vorspringenden oder einbuchtenden Abschnitten des Verankerungselements und/oder eines Lochs oder Spaltes.

Dokumente wie WO 2010130919 A1 (leimartige Zusammensetzungen für Holzprodukte, z.B. mit biogenen Polyolen), WO 2009087360 A1 (Bindemittel für Spanplatten und dergleichen z.B. mit Glyzerin aus Biodieselproduktion als Zusatz zu Silikatlösungen); WO2011019997 A1, WO 2011020010 A1, und WO2011020004 A1 (Polyole wie Rizinusöl oder Glyzerin als Reaktionskomponenten bei der Urethanherstellung für Formkörper mit Isocyanaten); WO 2008/014549 A1 (u.a. Polyole als Bestandteile von Phenolharzen), oder WO 2007112104 A1 (Polyole als Reaktionspartner für Isocyanate zur Bildung von Polyurethan-Formkörpern) beschreiben Zusätze, die zum Teil pflanzlichen Ursprungs sind.

Andere Dokumente aus dem Stand der Technik, z.B. EP 1 118 628 A1 oder WO 2003044114 A1, betreffen Mörtelmassen als im ersten Falle Zwei-Komponenten-Produkte auf Epoxidbasis als im zweiten Falle Kleber zum Sichern von Muttern auf Schrauben auf Basis radikalisch härtbarer Harze, die Glyzerintriglycidylether bzw. Alkandiol(meth)-acrylate und Glyzerin(methacrylate) als Komponenten beinhalten, wobei diese jedoch nicht als biogen charakterisiert sind.

US 20120247985 offenbart mehrkomponentige Verklebungsmittel mit Reaktivverdünnern.

KR 100 822 290 B1 betrifft einen epoxidharzbasierten Fußbodenklebstoff aus einer wässrigen Epoxidharz-Emulsion, welcher mittels eines Verdünners auf der Basis eines aus pflanzlichem Öl gewonnenen Fettsäureesters hergestellt werden kann. Lediglich bereits ausgehärtete Epoxide werden eingesetzt.

CN 103 013 411 A betrifft wärmedämmende Klebeschichten sowie ein Verfahren zu deren Herstellung.mit biologisch abbaubaren Verdünnern.

Der Stand der Technik betrifft somit andere Aufgaben und Lösungen als bei der nun vorliegenden Erfindung.

Im Bereich der Kunstharze und Kunststoffe gibt es aus ökologischen, wirtschaftlichen und durch die Gesetzgebung favorisierten Gründen einen Bedarf, den Anteil von organisch gebundenem Kohlenstoff fossiler Bestandteile (beispielsweise aus Erdöl, Braun- oder Steinkohle gewonnen) zu vermindern.

Biomasse bzw. biosphärenbasierte (erneuerbare, nachhaltige, biobasierte) oder eben "biogene" Rohstoffe für Kohlenstoff sind ressourcenschonend und wegen ihrer langfristigen Erhältlichkeit von besonderem Interesse.

Zur Bewertung des Anteils an biobasierten Rohstoffen wird üblicherweise der Anteil biobasierten Kohlenstoffs, nachgewiesen durch die ¹⁴C-Methode, ermittelt. Da das Verhältnis der Kohlenstoffisotope noch nach dem Produktionsprozess bestimmt werden kann, ist eine Unterscheidung zwischen fossiler und biogener Biomasse möglich.

Biobasierte Produkte können vollständig oder mindestens teilweise aus biobasierten Rohstoffen bestehen. Es können auch weitere Zusatzstoffe, anorganische Stoffe oder fossile Materialien, oder zwei oder mehr davon, enthalten sein.

Es gibt Bestrebungen, vereinheitlichte Zertifizierungen von Produkten mit biobasierten Anteilen zu ermöglichen. Ein Beispiel ist das Zertifizierungsprogramm für biobasierte Produkte nach ASTM 6866 des TÜV Rheinland (DIN CERTCO, Berlin, Deutschland) für die Erlangung eines Kennzeichnungsrechts für ein Zertifikat "Biobasiert ... % DIN Geprüft", beispielsweise "Biobasiert 50 bis 85 % DIN Geprüft".

Für die Erlangung eines derartigen Zertifikats wird eine Doppelmindestanforderung festgelegt: Zum einen muss der Mindestgehalt an organischem Material, bestimmbar als Glühverlust, mindestens 50 Gew.-% betragen.

Zum anderen muss der Gehalt an biobasiertem Kohlenstoff 20 Gew.-% überschreiten (für ein Zertifikat "Biobasiert 20 bis 50 % DIN Geprüft" muss er zwischen 20 und 50 Gew.-% liegen, für ein Zertifikat "Biobasiert 50 bis 85 % DIN Geprüft" muss er zwischen 50 und 85 Gew.-% liegen, für ein Zertifikat "Biobasiert > 85 % DIN Geprüft" muss er bei mindestens 85 Gew.-% liegen.

Die Prüfung eines Produktes erfolgt durch Probennahme (meist durch den Hersteller oder Vertreiber selbst) aus der Produktion oder dem Vertrieb/Verkauf und deren Prüfung. Es gibt eine Erstprüfung und eine regelmäßige Überwachung.

Der Glühverlust kann dabei nach üblichen Verfahren bestimmt werden. Er entspricht der Menge an organischem Material. Eine bekannte Masse mo des Prüfmaterials wird verascht, die Masse des erhaltenen Rückstands an Feststoffen m_{f} bestimmt und von mo abgezogen. Dies entspricht dem flüchtigen bzw. organischen Anteil des Prüfmaterials. Ein hoher Glühverlust deutet auf einen hohen Anteil an organischer Substanz in der Probe hin, da der enthaltene Kohlenstoff oxidiert wird und als Kohlendioxid entweicht. Die Bestimmung kann z.B. nach DIN EN 14775 oder DIN 18128 erfolgen.

Der Anteil an biobasiertem Kohlenstoff wird für die erfindungsgemäß verwendeten Kunstharz-Verklebungsmittel auf der Basis der ASTM 6866 (Standard Test Method for Determining the Biobased Content of Solid, Liquid and Gaseous Samples Using Radiocarbon Analysis, ermittelt (ASTM International, D6866-12: 2008, Methode A) durchgeführt.

Eine Aufgabe der Erfindung war, den Anteil biogener Materialien in Kunstharz-Verklebungsmitteln zu erhöhen und so umwelt- und nachhaltigkeitsbezogene Produktkennzahlen (wie sie z.b. in der Sachbilanz im Rahmen einer Environmental Product Declaration (EPD) oder im "Carbon Foot Print" ermittelt werden) zu verbessern. Der Verbrauch an Energie soll vermindert und die Kohlendioxidbilanz verbessert werden.

Ziel ist dabei auch, dass die Befestigungssysteme einen biobasierten C-Gehalt von > 20, insbesondere > 50, > 55, > 60, > 65, > 70, > 75 oder > 80 % (geprüft nach ASTM6866) aufweisen (entsprechend sind bevorzugte Erfindungsvarianten durch derartige Gehalte charakterisiert).

Es wurde nun gefunden, dass (wo erwähnt, jeweils) biogene reaktive Verdünner und Harze hervorragend geeignet sind, um Kunstharz-Verklebungsmittel der eingangs genannten Art zu verwirklichen.

Die Erfindung betrifft daher die eingangs oder in Anspruch 1 dargelegten Verwendungen,

Auch entsprechende Verfahren zum Einmörteln von Verankerungselementen und Löchern oder Spalten, bei denen ein erfindungsgemäßes mehrkomponentiges Kunstharz-Verklebungsmittel zum Einmörteln von Verankerungsmitteln verwendet wird, wobei das Kunstharz-Verklebungsmittel und ein Verankerungsmittel nacheinander, insbesondere zuerst das Kunstharz-Verklebungsmittel, dann das Verankerungsmittel, oder (mindestens im wesentlichen) gleichzeitig in ein Loch oder einen Spalt in einem Substrat (auch in einem gerissenen Substrat, wie in gerissenem Beton) eingebracht werden, seien hier für Referenzzwecke offenbart..

Die nachfolgenden Definitionen dienen der Klärung bestimmter Begriffe oder Symbole und der Beschreibung besonderer Ausführungsformen der Erfindung, wobei in den vor- und nachstehend genannten Ausführungsformen der Erfindung einzelne, mehrere oder alle Begriffe oder Symbole durch speziellere Definitionen ersetzt werden können, was zu besonderen Ausführungsformen der Erfindung führt.

Biogen bedeutet - innerhalb der Grenzen nach Anspruch 1 - dass die reaktiven Verdünner oder Harze oder ("mit biogenem Anteil") mindestens Teile ihrer Moleküle, und gegebenenfalls andere biogene Komponenten, aus Pflanzen oder pflanzlichen oder ferner tierischen Materialien gewonnen werden, wobei der biogene Charakter anhand der ASTM6866 (über den 14C-Gehalt) nachgewiesen wird, wie oben beschrieben.

Wo Gewichtsangaben in Prozent (Gew.-%) gemacht werden, beziehen sich diese, wenn nichts anderes gesagt ist, auf die Gesamtmasse der Reaktanden und Zusätze des erfindungsgemäßen Kunstharz-Verklebungsmittels (also die in der nach dem Mischen auszuhärtenden Masse vorhandenen Bestandteile bzw. deren Vorstufen ohne Verpackung, außer im Falle von Patronen oder Folien, die ebenfalls als Füllstoffe einen Beitrag zur Gesamtmasse des härtenden bzw. gehärteten Materials liefern können, und ohne andere mögliche Teile wie Statikmischer, Kartuschengehäuse oder dergleichen).

Wo von biogenen Harzen oder solchen mit biogenem Anteil die Rede ist, sind darunter vorzugsweise derartige reaktive Natur- oder insbesondere Kunstharze zu verstehen.

Wo (Meth)acrylate erwähnt werden, bedeutet dies Acrylate, Methacrylate oder Mischungen davon.

Reaktive Verdünner oder Harze mit biogenem Anteil sind epoxidiertes Sojabohnenöl(meth)acrylat, 1,10-Decandioldi(meth)acrylat, Tehtrahydrofurylmethacrylat, Isobornyl(meth)acrylat, Sorbitol(meth)acrylat, (meth)acryliertes Fuselöl, oder rein biogenes Glycerintri(meth)acrylat oder solches, bei dem mindestens der (Meth)acrylatanteil biogen ist,

In besonderen Fällen ist auch der (Meth)acrylsäureanteil biogenen Ursprungs. Insbesondere (Meth)acrylsäure (z.B. nach EP1710227 B1, DE102008038273A1 oder "Einführung in die Technische Chemie", Arno Behr, David W. Agar, Jakob Jörissen, Spektrum Akademischer Verlag Heidelberg, 2010, S. 139) kann dabei nach an sich bekannten Verfahren aus Milchsäure hergestellt werden.

Die reaktiven Verdünner mit biogenem Anteil werden beispielsweise in einem Anteil von 0,5 bis 80 Gew.-%, beispielsweise von 1 bis 55 Gew.-%, zugesetzt. Ein Beispiel für geeignete Anteile liegt im Bereich von 1 bis 35 Gew.-%, ein anderes Bespiel im Bereich von 36 bis 60 Gew.-%.

"Beinhalten" oder "umfassen" bedeutet, dass neben den genannten Komponenten oder Merkmalen noch andere vorhanden sein können, steht also für eine nicht abschließende Aufzählung, im Gegensatz zu "enthalten", das eine abschließende Aufzählung der bei seiner Verwendung aufgezählten Komponenten oder Merkmale bedeutet.

Wo das Attribut "ferner" erwähnt wird, bedeutet dies, dass Merkmale ohne dieses Attribut stärker bevorzugt sein können.

"Und/oder" bedeutet, dass die genannten Merkmale/Substanzen jeweils alleine oder in Kombination von zwei oder mehr der jeweils genannten Merkmale/Substanzen vorliegen können.

"Ein" steht in der Regel (außer wenn wie direkt anschließend hier im Satz als Zahl erkennbar) für den unbestimmten Artikel und bedeutet insbesondere "mindestens ein" (im Sinne von 1, 2 oder mehr).

Als Kunstharz finden in erster Linie Reaktiv-Kunstharze auf Epoxidbasis für Referenzzwecke oder für die Erfindungsgegenstände radikalisch härtbare (= nach Zugabe eines Radikalbildners (Härter) härtende) Reaktiv-Kunstharze Verwendung (härtbare Komponente), die jeweils durch entsprechende Härter (Härterkomponenten) gehärtet werden können, wie z.B. nachstehend beschrieben.

### Kunstharze auf Epoxidbasis (offenbart für Referenzzwecke):

Die bei der Verwendung von bzw. in erfindungsgemäßen mehrkomponentigen Kunstharz-Verklebungsmitteln verwendbaren Reaktiv-Kunstharze auf Epoxidbasis beinhalten eine Epoxidkomponente, vorzugsweise auf Basis von Glycidylverbindungen, beispielsweise solchen mit einer durchschnittlichen Glycidylgruppenfunktionalität von 1,5 oder größer, insbesondere von 2 oder größer, z.B. von 2 bis 10, die optional weitere(n) Glycidylether als Reaktivverdünner beinhalten kann. Bei den Epoxiden der Epoxidkomponente han¬delt es sich vorzugsweise um Poly(einschließlich Di)-glycidylether von mindestens einem mehrwertigen Alkohol oder Phenol, wie Novolak, Bisphenol F oder Bis-phenol A, oder Gemische solcher Epoxide, beispielsweise erhältlich durch Umsetzung der entsprechenden mehrwertigen Alkohole mit Epichlorhydrin. Beispiele sind Trimethylolpropan-triglycidylether, Novolak-Epoxidharze, Bisphenol-A-Epichlorhydrinharze und/oder Bisphenol-F-Epichlor¬hydrinharze, beispielsweise mit einem durchschnittlichen Molekulargewicht von ≤ 2000 Da. Die Epoxidharze können beispielsweise ein Epoxidäquivalent von 120 bis 2000, vor-zugsweise 150 bis 400, wie insbesondere 155 bis 195, beispielsweise 165 bis 185 aufweisen. In einer erfindungsgemäßen Variante sind Harze, die mindestens teilweise aus biogenen Bestandteilen hergestellt sind, bevorzugt, da sie den Anteil an biogenem Kohlenstoff erhöhen, wie z.B. Bisphenol-A, Bisphenol-F- oder BisphenolA/F-Harze mit biogenem Glycidylanteil (erhältlich z.B. von Spolchemie, Revoluční 1930/86, 400 32 Ústí nad Labem, Tschechische Republik). Der Anteil an der Gesamtmasse der Reaktanden und Zusätze des Injektions-Kunstmörtelsystems beträgt vorzugsweise 5 bis unter 100 Gew.-%, insbesondere 10 bis 80 Gew.-%, 10 bis 70 Gew.-% oder 10 bis 60 Gew.-%. Möglich sind auch Gemische von zwei oder mehr solcher Epoxid-Komponenten. Geeignete Epoxidharze, Reaktivverdünner und Härter sind auch in dem Standardwerk von Lee H und Neville K, "Handbook of Epoxy Resins" (New. York: McGraw-Hill), 1982 zu finden (diese Verbindungen werden hier durch Bezugnahme aufgenommen).

"Auf Epoxidbasis" bedeutet insbesondere, dass die erfindungsgemäßen Kunstharz-Verklebungsmittel neben den bisher genannten Komponenten auch weitere übliche Inhaltsstoffe (z.B. Additive oder andere oben oder unten genannte Bestandteile) beinhalten können. Diese weiteren Inhaltsstoffe können beispielsweise in einer Menge von insgesamt bis zu 80, vorzugsweise zwischen 0,01 und 65 Gew.-%, vorliegen. Auch wo nicht ausdrücklich "auf Basis" erwähnt wird, sind derartige übliche Inhaltsstoffe mit beinhaltet.

Wichtige Beispiele für weitere Inhaltsstoffe sind ein oder mehrere ausgewählt aus Beschleunigern, nicht reaktiven oder weiteren (außer den biogenen) reaktiven Verdünnern, Thixotropiermitteln, Füllstoffen und weiteren Additiven.

Als Beschleuniger können z.B. tert-Amine, wie Imidazole oder tert-Aminophenole, wie 2,4,6-trimethylaminomethylphenol, Organophosphine oder Lewis-Basen oder-Säuren, wie Phosphorsäureester, oder Gemische von zwei oder mehr davon, in einer oder (insbesondere bei Mehrkomponentensystemen) bei mehreren der Komponenten, bevorzugt jeweils in einer Härterkomponente, beinhaltet sein, beispielsweise in einem Gewichtanteil von 0,001 bis 15 Gew.-%, bezogen auf die Gesamtmasse der Reaktanden und Zusätze des Injektions-Kunstmörtelsystems.

Als Thixotropiermittel können übliche Rheologiehilfsmittel verwen¬det werden, wie pyrogene (insbesondere z.B. unter Hydrophobisierung oberflächenbehandelte) Kieselsäure oder hydrierte (bei Raumtemperatur feste) oder hydroxyxalkylierte Rizinusöle. Sie können z.B. in einem Gewichtsanteil von 0,001 bis 50 Gew.-%, beispiels-weise von 0,5 bis 20 Gew.-%, zugesetzt werden.

Die Füllstoffe können in einer oder in mehreren Komponenten, beispielsweise eines erfindungsgemäßen Mehrkomponentenkits, beispielsweise einer oder beiden Komponenten eines entsprechenden Zweikomponentenkits, vorhanden sein; der Anteil an weiteren Füllstoffen beträgt vorzugsweise 0 bis 90 Gew.-%, beispielsweise 10 bis 90 Gew.-%. Hierfür können biogene Füllstoffe, wie Ligninsulfonate, Kern- oder Schalenmehle aus Früchten, beispielsweise Kokosnussschalenmehl, Walnussschalenmehl oder Olivenkernmehl, oder Pflanzenkohle, oder Gemische von zwei oder mehr davon, verwendet werden. Auch nicht.-biogene Füllstoffe, wie Korund, Quarzssand oder Quarzmehl, können zugesetzt sein. Ferner können hydraulisch härtbare Füllstoffe, wie Gips, Branntkalk oder Zement (z.B. Tonerd- oder Portlandzement), Wassergläser oder aktive Aluminiumhydroxide, oder zwei oder mehr davon, zugesetzt werden.

Auch weitere Inhaltsstoffe können zugesetzt sein, wie Weichmacher, nicht reaktive Verdünnungs-mittel, Flexibilisatoren, Stabilisatoren, Rheologiehilfsmittel, Netz und Dispergiermittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, Gemische von zwei oder mehr davon. Derartige weitere Zusätze können vorzugsweise insgesamt in Gewichtsanteilen von insgesamt 0 bis 90 %, beispielsweise von 0 bis 40 Gew.-%, zugesetzt sein.

Bestimmte der bei der Definition der Epoxide genannten Verbindungen, wie Trimethyl¬propantriglycidylether oder Hexandioldiglycidylether oder Glycidyloxypropyltrimethoxysilan, die eine geringere Viskosität als aromatische Gruppen enthaltende Epoxide aufweisen, können auch als weitere reaktive Verdünner eingesetzt werden, beispielsweise in einem Gewichtsanteil von 0,1 bis 90 Gew.-%, z.B. zwischen 0,5 und 75 Gew.-% oder zwischen 1 und 40 Gew.-%.

Der Härter beinhaltet mindestens eine zur Epoxidhärtung gebräuchliche Verbindung (Reaktionspartner bei der Polyaddition). Der Begriff "Härter" bedeutet dabei vorzugsweise mindestens eine zur Epoxidhärtung gebräuchliche Verbindung mit oder ohne Füllstoffzusatz (insbesondere von biogenen Füllstoffen gemäß der Erfindung) und/oder weitere Zusätze, wie Wasser, Verdickungsmittel und/oder weitere Zusatzstoffe, wie Farbstoffe und dergleichen, mit anderen Worten, die komplette Härterkomponente. Der Härter kann als separate Komponente und/ oder (insbesondere in geschützter Form, d.h. z.B. in mikroverkapselter Form) auch in der Reaktionsharzformulierung (als einer härtbaren Kom-ponente, d.h. einer solchen, die nach Mischung mit dem Härter nach Aufbrechen der Hülle der Mikrokapsel durch Polyme¬risation aushärtet) eingearbeitet sein. Übliche Zusätze können zugesetzt sein, wie z.B. Füllstoffe (insbesondere wie oben definiert) und/ oder (insbesondere zur Herstellung einer Paste oder Emulsion) Lösungsmittel (nicht reaktive Verdünner), wie Benzylalkohol und/oder Wasser.

Bei den zur Epoxidhärtung gebräuchlichen Verbindungen (die als Reaktionspartner bei der Polyaddition fungieren) handelt es sich insbesondere um solche mit zwei oder mehr Gruppen ausgewählt aus Amino, Imino, und Mercapto, beispielsweise entsprechende Amine (bevorzugt), Thiole, oder Amino¬thiole, oder Gemische von zwei oder mehr davon, beispielsweise wie in Lee H and Neville K, "Handbook of Epoxy Resins" (New. York: McGraw-Hill), 1982, genannt, welches hier diesbezüglich durch Bezugnahme aufgenommen wird, beispielsweise darin genannte Di- oder Polyamine, und/ oder Di- oder Polythiole.

In besonderen Ausführungsformen der Erfindung weisen die zur Epoxidhärtung gebräuchlichen Verbindungen, die Epoxidbasis oder beide keine Kautschukmodifikation auf.

Die zur Epoxidhärtung (allgemein) gebräuchlichen Verbindungen umfassen beispielsweise in einer Ausführungsform der Erfindung
- Di- oder Polyamine wie insbesondere aliphatische (wie Ethylendiamin), cycloaliphatische und aromatische Di- oder Polyamine, Amidoamine, Aminaddukte, Polyetherdiamine oder Polyphenyl/Polymethylenpolyamine, Mannich-Basen, Polyamide und dergleichen (wobei Mannich-Basen, insbesondere wie in der Druckschrift WO 2005/090433, vor allem auf den Seiten 3, letzter, bis S. 6, 2. Absatz offenbart, wie in Beispiel 1 oder insbesondere 2 davon, die hier diesbezüglich durch Bezugnahme aufgenommen wird, oder ganz besonders basierend auf (biogenem) Cardanol, alleine oder im Gemisch mit ein oder mehreren weiteren Di- oder Polyaminen hervorzuheben sind);
- Di- oder Polythiole wie insbesondere di- oder höherfunktionale Thiole, beispielsweise Dimercapto-α,ω-C1-C12-Alkane, 4,4'-Dimercaptodicyclohexylmethan, Dimercaptodiphenylmethan oder dergleichen;
- ferner aliphatische Aminole, wie insbesondere Hydroxyniederalkylamine, wie Ethanolamin, Diethanolamin oder 3-Aminopropanol, oder aromatische Aminole, wie 2-, 3- oder 4-Aminophenol.

Es können auch Mischungen von zwei oder mehr der genannten zur Epoxidhärtung gebräuchlichen Verbindungen verwendet werden bzw. beinhaltet sein.

Die zur Epoxidhärtung gebräuchlichen Verbindungen liegen, falls vorhanden, vorzugsweise in Mengen von bis zu 95 Gew.-%, vorzugsweise von 2 bis 70 Gew.-%, bezogen auf die Gesamtmasse der Reaktanden und Zusätze der auszuhärtenden Masse des Kunstharz-Verklebungsmittels (z.B. Injektions-Kunstharzsystems) vor.

Bezogen auf die Härterkomponente eines erfindungsgemäßen mehrkomponentigen Kunstharz-Verklebungsmittels liegt der Anteil der entsprechenden Verbindungen in einer möglichen bevorzugten Ausführungsform der Erfindung bei 1 bis 100 Gew.-% z.B. 4 bis 95 Gew.-%, 5 bis 90 Gew.-% oder 10 bis 80 Gew.-%.

Insbesondere im Falle einer Härterkomponente eines erfindungsgemäßen Mehrkomponenten¬systems können auch weitere Zusätze Bestandteil des "Härters" sein, wie Wasser, organische Lösungsmittel, wie Benzylalkohol, Füllstoffe (z.B. wie oben genannte) und weitere der oben genannten Inhaltsstoffe, beispielsweise in einem Gewichtanteil von insgesamt 0,01 bis 70 Gew.-%, z.B. von 1 bis 40 Gew.-%.

### Radikalisch härtbare Reaktiv-Kunstharze (für erfindungsgemäße Verwendungen)

Bei den (in den Ausführungsformen der Erfindung bevorzugten) radikalisch härtbaren Reaktiv-Kunstharzen handelt es sich in erster Linie um solche auf der Basis von radikalisch härtenden ungesättigten Reaktionsharzen und in einer separaten Komponente vorhandenen radikalischen Härtern.

Vorzugsweise ist keine Wärmezufuhr und/oder (z.B. UV-) Lichtzufuhr von außen bei deren Verwendung erforderlich.

Unter radikalisch härtenden ungesättigten Reaktionsharzen sind in erster Linie solche zu verstehen, die als radikalisch aushärtende (was "(z.B. vor Härterzugabe) aushärtbar" einschließt) Komponenten organische Verbindungen mit ungesättigten (z.B. olefinischen) Resten beinhalten oder insbesondere aus solchen Verbindungen bestehen, insbesondere solche, die 2 oder mehr ungesättigte (olefinische) Reste je Molekül beinhalten, vor allem solche, die härtbare Ester mit ungesättigten Carbonsäureresten umfassen; vorzugsweise jeweils propoxyliertem oder insbesondere ethoxyliertem aromatischem Diol-, wie Bisphenol-A-, Bisphenol-F- oder Novolak-(insbesondere di-) (meth)acrylat, Epoxy(meth)acrylate, insbesondere in Form insbesondere von Umsetzungs-produkten von Di- oder Polyepoxiden, z.B. Bisphenol-A-, Bisphenol-F- oder Novolak-di- und/ oder-poly-glycidylethern, mit ungesättigten Carbonsäuren, z.B. C₂-C₇-Alkencarbonsäuren, wie insbesondere (Meth)acrylsäure, Urethan- und/oder Harnstoff(meth)acrylate (was auch oligo- oder polymere Varianten einschließt), und/oder ungesättigte Polyester¬harze, oder dergleichen, beispielsweise mit einem durchschnittlichen Molekulargewicht von ≤ 2000; oder zwei oder mehr dieser härtbaren ungesättigten organischen Komponenten; beispielsweise in einem Gewichtsanteil von 0,1 bis 90 Gew.-%, z.B. zwischen 0,5 und 75 Gew.-% oder zwischen 1 und 40 Gew.-% oder von 40 bis 65 Gew.-%.

Beispiele für in besonderen Ausführungsformen der Erfindung vorhandene bzw. verwendete Epoxy(meth)acrylate sind solche der Formel 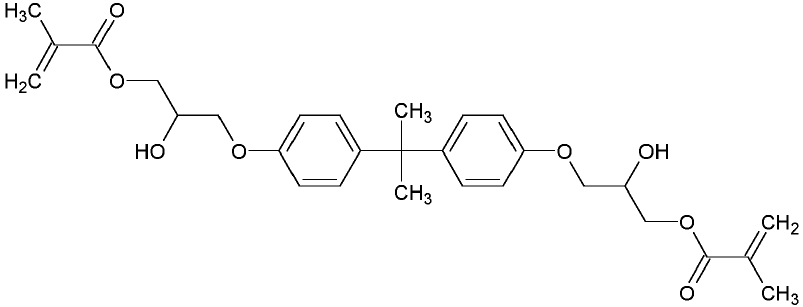 oder allgemeiner unter Berücksichtigung der Vorverlängeungsreaktion bei der Herstellung des Bisphenol-A-diglycidylethers der Formel 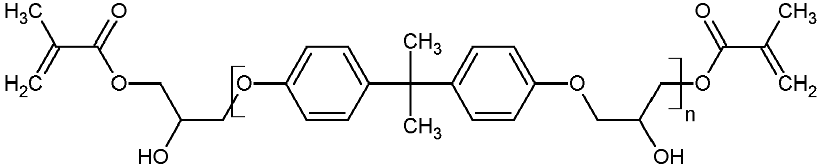 worin n für eine Zahl größer oder gleich 1 steht (wenn Gemische verschiedener Moleküle mit unterschiedlichen n-Werten vorliegen und durch die Formel repräsentiert werden, sind auch nicht-ganzzahlige Zahlen als Mittelwert möglich). Auch diese werden nachfolgend unter dem Begriff "Vinylester" subsumiert.

Beispiele für in besonderen Ausführungsformen der Erfindung vorhandene bzw. verwendete propoxylierte oder insbesondere ethoxylierte aromatische Diol-, wie Bisphenol-A-, Bisphenol-F- oder Novolak-(insbesondere di-)(meth)acrylate sind solche der Formel 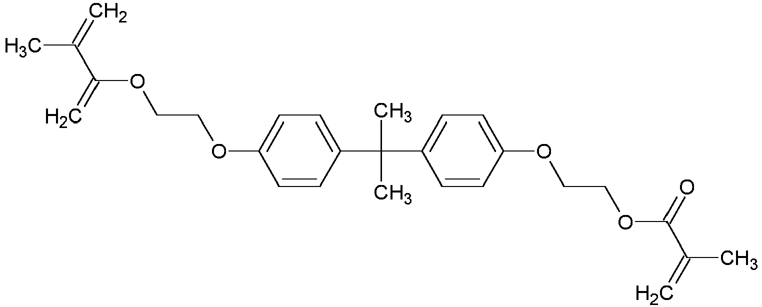 oder allgemein noch unter Berücksichtigung höherer Ethoxylierungsgrade: 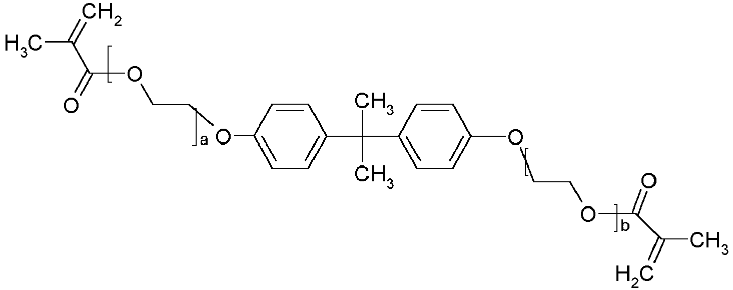 worin a und b jeweils unabhängig voneinander für eine Zahl größer oder gleich 0 stehen mit der Maßgabe, dass vorzugsweise mindestens einer der Werte größer als 0 ist, vorzugsweise beide 1 oder größer sind (wenn Gemische verschiedener Moleküle mit unterschiedlichen (a und b)-Werten vorliegen und durch die Formel repräsentiert werden, sind auch nicht-ganzzahlige Zahlen als Mittelwert möglich, für isoliert betrachtete Einzelmoleküle jeweils nur ganze Zahlen). Auch diese werden nachfolgend unter dem Begriff "Vinylester" subsumiert.

Wichtige Beispiele für weitere Inhaltsstoffe sind hier aminische Beschleuniger, Inhibitoren, nicht reaktive oder weitere (außer den biogenen) reaktive Verdünner, Thixotropiermittel, Füllstoffe und/oder weitere Additive.

Als aminische Beschleuniger kommen solche mit hinreichend hoher Aktivität in Frage, wie insbesondere (vorzugsweise tertiäre, insbesondere hydroxyalkylaminogruppensubstituierte) aromatische Amine ausgewählt aus der Gruppe, die aus epoxyalkylierten Anilinen, Toluidinen oder Xylidinen, wie z.B. ethoxyliertem Toluidin, Anilin oder Xylidin, beispielsweise N,N-bis(hydroxypropyl- oder hydroxyethyl)-toluidinen oder-xylidinen, wie N,N-bis(hydroxypropyl- oder hydroxyethyl)-p-toluidin, N,N-Bis(hydroxyethyl)-xylidin und ganz besonders entsprechenden höher alkoxylierten technischen Produkten, ausgewählt sind. Ein oder mehrere derartige Beschleuniger sind möglich. Die Beschleuniger haben, vorzugsweise einen Anteil (Konzentration) von 0,005 bis 10, insbesondere von 0,1 bis 5 Gew.-%.

Als Inhibitoren können beispielsweise nichtphenolische (anaerobe) und/oder phenolische Inhibitoren zugesetzt werden.

Als phenolische Inhibitoren (die oft als bereits zugemischter Bestandteil von käuflichen radikalisch härtenden Reaktionsharzen vorgesehen sind, aber ferner auch fehlen können) kommen (nicht-alkylierte oder alkylierte) Hydrochinone, wie Hydrochinon, Mono-, Di- oder Trimethylhydrochinon, (nichtalkylierte oder alkylierte) Phenole, wie 4,4'-Methylen-bis(2,6-di-tert-butylphenol), 1,3,5-Trimethyl-2,4,6-tris(3,5-di-tert-butyl-4-hydroxy¬benzyl)-benzol, (nicht-alkylierte oder alkylierte) Brenzcatechine wie tert.-Butylbrenzcatechin, 3,5-Di-tert-butyl-1,2-benzoldiol, oder insbesondere 4-Methoxyphenol, oder Gemische von zwei oder mehr davon, in Frage. Diese haben vorzugsweise einen Anteil von bis zu 1 Gew.-%, insbesondere zwischen 0,0001 und 0,5 Gew.-%, z.B. zwischen 0,01 und 0,1 Gew.-%.

Als nicht-phenolische oder anaerobe (d.h. im Gegensatz zu den phenolischen Inhibitoren auch ohne Sauerstoff wirksame) Inhibitoren (welche insbesondere die Aushärtezeiten kaum beein-flussen) kommen vorzugsweise Phenothiazin oder organische Nitroxylradikale in Betracht. Als organische Nitroxylradikale können beispielsweise solche zugesetzt sein, wie sie in der DE 199 56 509, die hier insbesondere bezüglich der darin genannten Verbindungen durch Bezugnahme inkorporiert wird, beschrieben sind, insbesondere 1-Oxyl-2,2,6,6-tetrame¬thyl-piperi¬din-4-ol ("4-OH-TEMPO" oder "TEMPOL"). Der Gewichtsanteil der nichtphenolischen Inhibitoren liegt vorzugsweise, bezogen auf die Reaktionsharzformulierung, im Bereich von 1 ppm (Gew.) bis 2 Gew.-%, insbesondere z.B. im Bereich von 10 ppm bis 1 Gew.-%.

Als Thixotropiermittel können übliche thixotropieverursachende Rheologiehilfsmittel verwendet werden, wie pyrogene Kieselsäure und/oder hydrierte (bei Raumtemperatur feste) oder hydroxyxalkylierte Rizinusöle. Sie können z.B. in einem Gewichtsanteil von 0,01 bis 50 Gew.-%, beispielsweise von 0,5 bis 20 Gew.-%, zugesetzt werden.

Als Füllstoffe können übliche Füllstoffe, insbesondere Zemente (z.B. Portlandzemente oder Tonerdeschmelzzemente), Kreiden, Sand, Quarzsand, Quarzmehl oder dergleichen, die als Pulver, in körniger Form oder in Form von Formkörpern zugesetzt sein können, Verwendung finden, oder andere, wie insbesondere Kern- oder Schalenmehle aus Pflanzen, was den biogenen Kohlenstoffanteil weiter erhöht, wie Olivenkernmehl, Kokosnussschalenmehl oder ferner Walnussschalenmehl, oder auch hydraulische Füllstoffe, wie oben unter den Epoxiden beschrieben, oder Gemische von zwei oder mehr davon, wobei die Füllstoffe ferner oder insbesondere auch silanisiert sein können.

Die Füllstoffe können in einer oder in mehreren Komponenten eines erfin-dungsgemäßen mehrkomponen¬tigen Kunstharz-Verklebungsmittels, beispielsweise einer oder beiden Komponenten eines entsprechenden Zweikomponentenkits, vorhanden sein; der Anteil an Füllstoffen beträgt vorzugsweise 0 bis 90 Gew.-%, beispielsweise 10 bis 50 Gew.-% (wobei auch beim Einbringen von Verankerungselementen zerstörtes Hüllmaterial (z.B. zersplittertes Glas oder zersplitterter Kunststoff), beispielsweise Scherben aus Patronen, mit als Füllstoff gerechnet werden kann). Zusätzlich oder alternativ zu ein oder mehreren der genannten Füllstoffe können hydraulisch härtbare Füllstoffe, wie Gips, Branntkalk oder Zement (z.B. Tonerd- oder Portlandzement), Wassergläser oder aktive Aluminiumhydroxide, oder zwei oder mehr davon, zugesetzt werden.

Auch weitere Inhaltsstoffe können zugesetzt sein, wie Weichmacher, nicht reaktive Verdünner, Flexibilisatoren, Stabilisatoren, Rheologiehilfsmittel, Netz- und Dispergiermittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder sonstige Additive, Gemische von zwei oder mehr davon. Derartige weitere Zusätze können vorzugsweise insgesamt in Gewichtsanteilen von insgesamt 0 bis 90 %, beispielsweise von 0 bis 40 Gew.-%, zugesetzt sein.

Als "weitere reaktive Verdünner" )neben den erfindungsgemäßen), z.B. zu bevorzugten Vinylestern oder Urethan(meth)acrylaten, können zusätzlich auch ein oder mehrere (niedrigerviskose) radikalisch härtende ungesättigte Reaktivverdünner in nicht-biogener Form zugesetzt sein, worunter in erster Linie solche zu verstehen sind, die als radikalisch aushärtende (was "(z.B. vor Härterzugabe) aushärtbar" einschließt) Komponenten organische Verbindungen mit ungesättigten (z.B. olefinischen) Resten beinhalten oder insbesondere aus solchen Verbindungen bestehen, z.B. insbesondere (Meth)Acrylat-oder (Meth)-Acrylamid-Monomere, wie Acrylsäure und/oder Methacrylsäure oder vorzugsweise deren Ester (als (Meth)acrylate bezeichnet) oder Amide, insbesondere (Meth)Acrylate wie Mono-, Di-, Tri- oder Poly (meth)acrylate (einschließlich Hydroxyalkyl(meth)acrylaten, wie Hydroxypropyl-(meth)acrylat oder Hydroxy-ethyl(meth)acrylat, Alkyl(meth)acrylate mit 1 bis 10 (Meth)-acrylatgruppen, wie Mono-, Di-, Tri-, Tetra-, Penta-, Hexa- oder poly(meth)acrylate, z.B. Alkyldi- oder tri(meth)acrylate, wie 1,2-Ethandioldi(meth)acrylat (Ethylenglykoldi(meth)-acrylat), Butandioldi(meth)acrylat, wie 1,3- oder insbesondere 1,4-Butandioldi(meth)acrylat, Hexandioldi(meth)acrylat, 1,10-Decandioldi(meth)acrylat, Diethylglykol-di(meth)acrylat, Trimethylolpropantri(meth)acrylat, Glycerintri(meth)acrylat, Polyglycerinpoly(meth)acrylat, Polyethylenglykoldi(meth)acrylat, Cycloalkyl-, Bicycloalkyl- oder Heterocyclyl(meth)acrylate, worin Cycloalkyl oder Bicycloalkyl 5 bis 7 Ringkohlenstoffatome aufweist und Heterocyclyl 5 oder 6 Ringatome hat und 1 oder 2 Ringheteroatome ausgewählt aus N, O und S aufweist, wie Tetrahydrofurfuryl(meth)acrylat oder Isobornyl(meth)acrylat, oder Acetoycetoxyalkyl-(meth)acrylat; oder ferner Styrole, wie Styrol, α-Methylstyrol, Vinyltoluol, tert.-Butylstyrol und/oder Divinylbenzol; oder Gemische von zwei oder mehr davon, als mit dem radikalisch härtenden ungesättigten Reaktionsharz parallel aushärtende Bestandteile, beispielsweise in einem Gewichtsanteil von 0,1 bis 90 Gew.-%, z.B. zwischen 0,5 und 75 Gew.-% oder zwischen 1 und 40 Gew.-%.

Als nicht reaktive Verdünner können beispielsweise Pflanzenöle, wie Rizinusöl, oder ferner Bioalkohole und Fettsäuren und deren Ester zugesetzt werden, oder Gemische von zwei oder mehr davon, beispielsweise in einem Anteil von 3 bis 60 Gew.-%, z.B. von 4 bis 55 Gew.-%.

Der Härter beinhaltet mindestens ein Peroxid als eigentlichen Initiator. Der Begriff "Härter" bedeutet dabei hier vorzugsweise vor- und nachstehend reine Initiatoren oder phlegmatisierte Initiatoren mit oder ohne Füllstoffzusatz und/oder weitere Zusätze, wie Wasser, Verdickungs-mittel und/oder weitere Zusatzstoffe, wie Farbstoffe, Pigmente, Additive und dergleichen, mit anderen Worten, die komplette Härterkomponente. Zur Phlegmatisierung können übliche Zusätze, wie Gips, Kreide, pyrogene (vorzugsweise oberflächenbehandelte, wie hydrophobisierte) Kieselsäure, Phthalate, Chlorparaffin oder dergleichen, zugesetzt sein. Daneben können auch noch Füllstoffe und/ oder (insbesondere zur Herstellung einer Paste oder Emulsion) Lösungsmittel (nicht reaktive Verdünner, wie z.B. flüssige (z.B. epoxidierte oder hydroxylgruppenhaltige) Öle, z.B. Rizinusöl, oder Wasser, Verdickungsmittel, Füllstoffe (wie z.B. oben genannte) und weitere der oben genannten Zusätze zugesetzt sein. Der Anteil aller Zusätze kann beispielsweise bei einem Gewichtsanteil von insgesamt 0,1 bis 99,5 Gew.-%, z.B. von 1 bis 99,5 Gew.-%, liegen.

Bezogen auf die Härterkomponente liegt der Anteil des Initiators (eigentlicher Härter) in einer möglichen bevorzugten Ausführungsform der Erfindung bei 0,5 bis 90 Gew.-%, insbesondere bei 0,9 bis 30 Gew.-%.

Als Initiator für die Härtung der erfindungsgemäßen Reaktionsharzformulierungen finden im Falle der radikalischen Polymerisation z.B. radikalbildende Peroxide, z.B. organische Peroxide, wie Diacylperoxide, z.B. Dibenzoylperoxid, Ketonperoxide, wie Methylethylketon-peroxid oder Cyclohexanonperoxid, oder Alkylperester, wie tert-Butylperbenzoat, anorganische Peroxide, wie Persulfate oder Perborate, sowie Mischungen davon Verwendung.

Der Anteil des Härters an einem erfindungsgemäßen Kunstharz-Verklebungsmittel liegt dabei vorzugsweise, bezogen auf die Masse (Gewicht) aller Reaktanden und Zusätze ohne Verpackung, in einem Bereich von 1 bis 60 Gew.-%, z.B. 2 bis 50 Gew.-%, wobei der Anteil an Per¬oxid, ebenfalls bezogen auf die Masse der gesamten zugehörigen Reaktionsharzformulierung (100 %), bei 0,1 oder mehr Gew.-%, in einer besonders bevorzugten Ausführungsform bei 0,1 bis < 1 Gew.-%, ferner auch bei 1 bis 10 Gew.-%, liegen kann.

Das radikalisch härtbare ungesättigte Reaktionsharz (bzw. die Gesamtmenge seiner Komponenten) ist beispielsweise in einem Gewichtsanteil von 5 bis 99,5 %, wie etwa von 10 bis 98,5, z.B. 10 bis 89,5 %, vorgesehen.

"Auf Basis" bedeutet *auch hier,* dass die erfindungsgemäßen Kunstharz-Verklebungsmittel neben den genannten Komponenten auch weitere übliche Inhaltsstoffe (z.B. Additive oder andere wie oben oder unten genannte Bestandteile) beinhalten können. Diese weiteren Inhaltsstoffe können zusammen beispielsweise in einer Menge von insgesamt bis zu 80, vorzugsweise zwischen 0,01 und 65 Gew.-%, vorliegen. Auch wo nicht ausdrücklich "auf Basis" erwähnt wird, sind derartige übliche Inhaltsstoffe mit beinhaltet.

Unter einem Loch oder Spalt ist ein solches Loch oder ein solcher Spalt zu verstehen, das oder der in einem festen (insbesondere bereits als solcher fertiggestellten) Untergrund (Substrat), insbesondere Mauerwerk oder Beton, ggf. auch in einem rissigen Substrat, wie rissigem Beton, vorhanden und von mindestens von einer Seite her zugänglich ist, beispielsweise ein Bohrloch, oder ferner ein beim Mörteln mit anorganischen Mörtel- oder Putzmassen (wie mit Zement oder Gips) ausgesparter Bereich oder dergleichen.

In einer besonderen Ausführungsform der Erfindungsgegenstände sind die härtbaren Komponenten und die zugehörigen Härter (Härterkomponenten) voneinander getrennt in einem Zwei- oder Mehrkomponentensystem aufbewahrt, bevor sie am gewünschten Ort (z.B. bei oder in einem Loch oder Spalt, wie Bohrloch) miteinander vermischt werden.

Die erfindungsgemäß zu verwendenden Injektions-Kunstharzsysteme sind als Mehr-Komponentensysteme (z.B. Mehrkomponentenkit) vorgesehen und werden auch als solche verwendet.

Unter einem Mehrkomponentenkit ist insbesondere ein Zwei- oder (ferner) Mehrkomponentenkit (vorzugsweise ein Zweikomponentenkit) mit einer Komponente (A), welche entweder ein oder mehrere radikalisch härtbare (= nach Zugabe eines Radikalbildners (Härter) härtende) Reaktiv-Kunstharze oder ein oder mehrere Reaktiv-Kunstharze auf Epoxidbasis beinhaltet, wie oben und unten beschrieben, und den jeweils zugehörigen Härter (Komponente (B)) wie oben und nachfolgend definiert, wobei weitere Zusätze in einer oder beider der Komponenten vorgesehen sein können, vorzugsweise eine Zwei- oder ferner Mehrkammervorrichtung, zu verstehen, worin die miteinander reaktionsfähigen Komponenten (A) und (B) und ggf. weitere separate Komponenten so enthalten sind, dass ihre Bestandteile während der Lagerung nicht (insbesondere unter Aushärtung) miteinander reagieren können, vorzugsweise so, dass ihre Bestandteile vor der Anwendung nicht miteinander in Berührung kommen, das es jedoch ermöglicht, die Komponenten (A) und (B) und gegebenenfalls weitere Komponenten zur Befestigung an der gewünschten Stelle, beispielsweise direkt vor oder in einem Loch, so zu vermischen und erforderlichenfalls einzubringen, dass dort die Härtungsreaktion stattfinden kann. Auch geeignet sind Patronen, beispielsweise aus Kunststoff, Keramik oder insbesondere Glas, in denen die Komponenten durch (beispielsweise bei Eintreiben eines Verankerungselements in ein Loch oder einen Spalt, wie ein Bohrloch) zerstörbare Abgrenzungswandungen oder integrierte separate zerstörbare Behältnisse voneinander getrennt angeordnet sind, beispielsweise als ineinander verschachtelte Patronen, wie Ampullen; sowie insbesondere Mehr- oder insbesondere Zweikomponenten¬kar¬tuschen (die ebenfalls besonders bevorzugt sind), in deren Kammern die mehreren oder vorzugsweise zwei Komponenten (insbesondere (A) und (B)) des erfindungsgemäßen Kunstharz-Verklebungsmittels mit oben und nachstehend genannten Zusammensetzungen zur Aufbewahrung vor der Nutzung enthalten sind, wobei vorzugsweise auch ein Statikmischer zum entsprechenden Kit gehört.

Vorteilhaft können die Verpackungsmaterialien (wie Folien, Kartuschen (auch Statikmischer) oder Kunststoffpatronen) ebenfalls aus Kunststoffen mit hohem oder vollständigem biogenem Kohlenstoffanteil ausgeführt sein, beispielsweise aus entsprechenden Polyamiden oder dergleichen.

Die Verwendung eines erfindungsgemäßen Kunstharz-Verklebungsmittels am gewünschten Einsatzort erfolgt durch Mischen der zugehörigen (vor Mischung reaktionshemmend separierten) Komponenten, insbesondere nahe bei und/ oder direkt vor einem Loch oder (beispielsweise insbesondere bei Verwendung von Kartuschen mit Statikmischern) direkt vor und/oder (insbesondere beim Zerstören entsprechender Patronen oder Ampullen) innerhalb eines Loches oder Spaltes, z.B. einem Bohrloch.

Unter "Einmörteln" ist insbesondere eine (stoff- und/oder formschlüssige) Befestigung von Verankerungsmitteln aus Metall (z.B. Hinterschneidanker, Gewindestangen, Schrauben, Bohranker, Bolzen) oder ferner aus einem anderen Material, wie Kunststoff oder Holz, in festen (vorzugsweise bereits als solche fertiggestellten) Substraten, wie Beton oder Mauerwerk, insbesondere, soweit sie Bestandteile von künstlich errichteten Bauwerken sind, vor allem Mauerwerk, Decken, Wände, Böden, Platten, Pfeilern oder dergleichen (z.B. aus Beton, Naturstein, Mauerwerk aus Vollsteinen oder Lochsteinen, ferner Kunststoff oder Holz), insbesondere in Löchern, wie Bohrlöchern, zu verstehen. Mittels dieser Verankerungsmittel können dann beispielsweise Geländer, Abdeckungselemente, wie Platten, Fassadenelemente oder andere Bauelemente befestigt werden.

Wo von "Gemischen von zwei oder mehr davon" die Rede ist, beinhaltet dies insbesondere Gemische von mindesten einem der genannten Bestandteile, die als bevorzugt hervorgehoben sind, mit ein oder mehreren anderen, insbesondere ein oder mehreren ebenfalls als bevorzugt gekennzeichneten Komponenten.

"Als solche fertiggestellt" bedeutet insbesondere, dass die Substrate bis auf mögliche Oberflächenmodifikationen (wie Beschichtung, z.B. Verputzen oder Lackieren) oder dergleichen bereits fertiggestellt (z.B. als Bausteine oder Mauern) und nicht erst gleichzeitig mit dem Verklebungsmittel fertiggestellt werden oder aus diesem bestehen. Mit anderen Worten: Das Verklebungsmittel ist dann nicht selbst bereits fertiggestelltes Substrat.

Die Einbringung des oder der Verankerungsmittel(s) erfolgt vorzugsweise bereits kurze Zeit, vorzugsweise 30 Minuten oder weniger, nach dem Mischen der Komponenten des erfindungsgemäßen Befestigungsmörtels. Zur Erläuterung: Mit der Mischung und Einbringung der Komponenten auf oder in die gewünschten Stellen, an denen Verankerungsmittel befestigt werden sollen, beginnen mehrere, im Wesentlichen parallel und/oder nur mit geringer zeitlicher Versetzung ablaufende Reaktionen. Die endgültige Aushärtung erfolgt in situ.

Spezifische Ausführungsformen der Erfindung betreffen auch die in den Ansprüchen und der Zusammenfassung aufgeführten Varianten - die Ansprüche und die Zusammenfassung werden hier daher durch Bezugnahme aufgenommen.

Die nachfolgenden Beispiele dienen der Illustration der Erfindung, ohne ihren Umfang einzuschränken, stellen jedoch ebenfalls besondere Ausführungsformen der Erfindung dar (wobei auch jeder einzelne spezifisch genannte Bestandteil in einem der vor- und nachstehend genannten Erfindungsgegenstände anstelle eines allgemeinen Begriffs stehen kann, oder mehrere oder alle, was spezielle Ausführungsformen der Erfindung definiert).

### Beispiel 1: Erfindungsgemäße Zwei-Komponenten-Verklebungsmittel auf Basis von radikalisch härtbaren Reaktivharzen

Aus folgenden polymerisierbaren Komponenten wurden erfindungsgemäße einsetzbare Komponenten (A) hergestellt:

| | **Mörtel 1** | **Mörtel 2** | **Mörtel 3** | **Mörtel 4** | **Mörtel 5** | **Mörtel 6** |
|---|---|---|---|---|---|---|
| **Rohstoff** | Anteil Gew.-% | Anteil Gew.-% | Anteil Gew.-% | Anteil Gew.-% | Anteil Gew.-% | Anteil Gew.-% |
| Ethoxyliertes Bisphenol-A-dimethacrylat(*) | 19 | 16 | 16 | 17 | 17 | 20 |
| T etrahydrofurfurylmethacrylat Sarbio 6100* | 9,9 | 9,9 | | | | |
| Isobornylmethacrylat* | | | | | | 18 |
| Epoxidiertes Sojabohnenölacrylat CN111* | | 5 | | | | |
| 1,10-Decandioldimethacrylat Sarbio 5201* | | | 9,9 | | | |
| Polyglycerinacrylat* | | | 5 | | | |
| Sorbitolacrylat (BASF)* | | | | 5 | | |
| Glycerintrimethacrylat* | | | | 5 | | |
| Methacryliertes Fuselöl* | | | | | 9,9 | |
| Inhibitorenmischung (ausgewählt aus t-BBC, Hydrochinon und/oder Tempol) | 0,05 | 0,05 | 0,05 | 0,05 | 0,05 | 0,05 |
| Aminbeschleuniger | 0,65 | 0,65 | 0,65 | 0,65 | 0,65 | 0,65 |
| pyrogene oberflächenbehandelte Kieselsäure | 1,5 | 1,5 | 1,5 | 1,5 | 1,5 | 1,5 |
| Quarzmehl | 41,9 | 41,9 | 41,9 | 43,8 | 43,9 | 39,8 |
| Olivenkernmehl | 27 | 25 | 25 | | | |
| Kokosnussschalenmehl | | | | 27 | 25 | 20 |
| | 100 | 100 | 100 | 100 | 100 | 100 |
| Biogehalt [%] | 50,5 | 56 | 54 | 54 | 52 | 52 |

| | | | | | | |
|---|---|---|---|---|---|---|
| )* = biogene oder mindestens einen biogenen Anteil aufweisende erfindungsgemäße reaktive Verdünner oder Harze (*) potentiell biogene oder mindestens einen biogenen Anteil aufweisende erfindungsgemäße reaktive Harze | | | | | | |

"Sarbio" ist eine Marke der Sartomer Europe, Colombes Cedex, Frankreich Sojabohnenölacrylat CN111 ist ebenfalls von Sartomer Europe.

Als Härterkomponente (B) wird jeweils verwendet:

| **Härterkomponente 1** | | |
|---|---|---|
| | **Rohstoff** | **Einsatzmenge [%]** |
| | Rizinusöl | 40,00 |
| | Dibenzoylperoxid 33 % in inertem Füllstoff | 16,00 |
| | Quarzsand | 41,50 |
| | pyrogene oberflächenbehandelte Kieselsäure | 2,00 |
| | Pigment | 0,50 |
| | | 100,00 |

Der Härter hat eine Dichte von 1,50 g/ccm und eine Viskosität von 120 Pa*s bei 23 °C,
gemessen mit Brookfield Spindel 7 bei 10 U/min. Der Biokohlenstoffgehalt liegt bei 88,9 %. Mit allen Mörtel-Härter-Kombinationen werden Befestigungsmörtel hergestellt (Volumenverhältnis von Komponente (A) zu (B) = 5 : 1). Mit allen Befestigungsmörteln konnten gute bis sehr gute Verbundspannungen im Bereich von 15-23 N/mm² erreicht werden.

### Beispiel 2: Zwei-Komponenten-Verklebungsmittel auf Basis von Reaktivharzen auf Epoxidbasis (für Referenzzwecke)

Aus folgenden polymerisierbaren Komponenten wurden einsetzbare Komponenten (A) hergestellt:

| | **Mörtel 7** | **Mörtel 8** | **Mörtel 9** | **Mörtel 10** |
|---|---|---|---|---|
| **Rohstoff** | Anteil Gew.-% | Anteil Gew.-% | Anteil Gew.-% | Anteil Gew.-% |
| Bisphenol-A/F-Harz mit einem Bio-C-Gehalt von 28 % (Spolchemie) | 45 | 45 | 45 | 45 |
| Trimethylolpropantriglycidlyether, Bio-C-Gehalt 64 % | 15 | | | 5 |
| Glycerintriglycidylether, Bio-C-Gehalt 100 % | | 20 | 20 | 15 |
| Netz- und Dispergiermittel | 2 | 2,5 | 2,5 | 2 |
| pyrogene oberflächenbehandelte Kieselsäure | 2 | 2 | 2 | 3 |
| Quarzsand | 7,5 | | | |
| Ligninsulfonat | | | 10,5 | |
| Olivenkernmehl | 28 | | 20 | |
| Kokosnussschalenmehl | | | | 30 |
| Walnussschalenmehl | | 30 | | |
| Pigment | 0,5 | 0,5 | | |
| | 100 | 100 | 100 | 100 |
| Biogehalt [%] | 50 | 58 | 56 | 57 |

Als Härterkomponente (B) wird jeweils verwendet:

| **Härterkomponente 1** | | |
|---|---|---|
| | **Rohstoff** | **Einsatzmenge [%]** |
| | Mannichbasenformulierun g basierend auf Cardanol | 60,00 |
| | Pflanzenkohle | 37,50 |
| | pyrogene oberflächenbehandelte Kieselsäure | 2,50 |
| | | |
| | | |
| | | 100,00 |

Der Härter hat eine Dichte von 1,28 g/ccm und eine Viskosität von 160 Pa*s bei 23 °C, gemessen mit Brookfield Spindel 7 bei 10 U/min. Der Biokohlenstoffgehalt liegt bei 73 %. Mit allen Mörtel-Härter-Kombinationen werden Befestigungsmörtel hergestellt (Volumenverhältnis von Komponente (A) zu (B) = 3 : 1). Mit den Befestigungsmörteln konnten sehr gute Verbundspannungen im Bereich von 18-25 N/mm² erreicht werden.

## Patentansprüche

1. Verwendung eines mehrkomponentigen Kunstharz-Verklebungsmittels für den Befestigungsbereich zum Einmörteln von einem Verankerungselement in einem Loch oder Spalt, wobei das Kunstharz-Verklebungsmittel und ein Verankerungsmittel in ein Loch oder einen Spalt, auch in einem rissigen Substrat, wie rissigem Beton, eingebracht werden und das Kunstharz-Verklebungsmittel zum Aushärten gebracht wird, wobei das Kunstharz-Verklebungsmittel reaktive Verdünner und/oder Harze umfasst, und wobei der reaktive Verdünner und/oder das reaktive Harz mindestens einen reaktiven Verdünner und/oder ein reaktives Harz, der bzw. das biogen ist oder einen biogenen Anteil aufweist, beinhaltet, ausgewählt aus epoxidiertem Sojabohnenöl(meth)acrylat, 1,10-Decandioldi(meth)acrylat, Tetrahydrofurfurylmethacrylat, Isobornylmethacrylat, Sorbitol(meth)acrylat, (meth)acryliertem Fuselöl, rein biogenem Glycerintri(meth)acrylat, und Gemischen von zwei oder mehrerer solcher mindestens teilweise biogener reaktiver Verdünner und/oder Harze,
wobei biogen, ein biogener Anteil oder mindestens teilweise biogen bedeutet, dass die reaktiven Verdünner oder diejenigen "mit biogenem Anteil" mindestens mit Teilen ihrer Moleküle aus Pflanzen oder pflanzlichen oder tierischen Materialien gewonnen werden, was anhand der ASTM6866 über den 14C-Gehalt nachgewiesen werden kann.

2. Verwendung eines mehrkomponentigen Kunstharz-Verklebungsmittels nach Anspruch 1, **dadurch gekennzeichnet, dass** der Anteil an reaktivem Verdünner mit biogenem Anteil bei 0.5 bis 80 Gew.-% liegt, bezogen auf alle Komponenten des Verklebungsmittels außer der Verpackung.

3. Verwendung eines mehrkomponentigen Kunstharz-Verklebungsmittels nach einem der Ansprüche 1 oder 2,
wobei der Anteil an biogenem Kohlenstoff, bestimmbar nach dem Zertifizierungsprogramm für biobasierte Produkte nach ASTM 6866 des TÜV Rheinland, bezogen auf die Gesamtformulierung ohne Verpackung, bei mindestens 20, > 50, mindestens 55, mindestens 60, mindestens 65, mindestens 75, mindestens 80 oder > 85 Gew.-% liegt.

4. Verwendung eines mehrkomponentigen Kunstharz-Verklebungsmittels nach einem der Ansprüche 1 bis 3, **dadurch gekennzeichnet, dass** es sich bei dem mehrkomponentigen Kunstharz-Verklebungsmittel um ein Zweikomponentenkit handelt, mit einer Reaktiv-Kunstharzkomponente (A) und einer Härterkomponente (B).

5. Verwendung eines mehrkomponentigen Kunstharz-Verklebungsmittels nach Anspruch 4, **dadurch gekennzeichnet, dass** das mehrkomponentige Kunstharz-Verklebungsmittel den Anteil an reaktivem Verdünner mit biogenem Anteil in der Kunstharzkomponente (A) enthält.

6. Verwendung eines Kunstharz-Verklebungsmittels nach Anspruch 4, **dadurch gekennzeichnet, dass** das mehrkomponentige Kunstharz-Verklebungsmittel einen Härter mit biogenem Anteil in der Härterkomponente (B) enthält.

7. Verwendung eines Kunstharz-Verklebungsmittels nach einem der Ansprüche 1 bis 5, **dadurch gekennzeichnet, dass** das mehrkomponentige Kunstharz-Verklebungsmittel als eine Reaktiv-Kunstharzkomponente (A) ein Reaktiv-Kunstharz auf Epoxidbasis oder ein radikalisch härtbares Reaktiv-Kunstharz, sowie jeweils eine Härterkomponente (B) beinhaltet.

8. Verwendung eines Kunstharz-Verklebungsmittels nach Anspruch 7, **dadurch gekennzeichnet, dass** das mehrkomponentige Kunstharz-Verklebungsmittel als Reaktiv-Kunstharzkomponente (A) ein radikalisch härtbares Reaktiv-Kunstharz und als Härterkomponente (B) eine solche mit einem Peroxid als Initiator beinhaltet.

9. Verwendung eines Kunstharz-Verklebungsmittels nach Anspruch 7, **dadurch gekennzeichnet, dass** das mehrkomponentige Kunstharz-Verklebungsmittel in der bzw. einer Reaktiv-Kunstharzkomponente (A) Epoxy(meth)acrylate der Formel 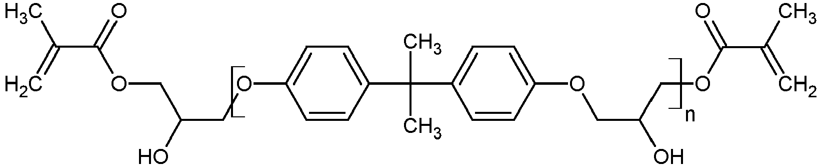 worin n für eine Zahl größer oder gleich 1 steht, und/oder propoxylierte oder ethoxylierte aromatische Diol-(meth)acrylate der Formel 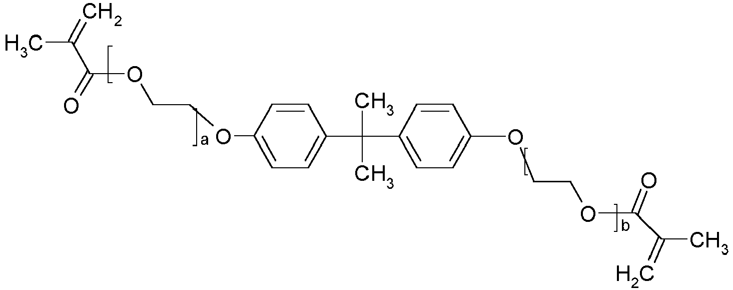 worin a und b jeweils unabhängig voneinander für eine Zahl größer oder gleich 0 stehen mit der Maßgabe, dass vorzugsweise mindestens einer der Werte größer als 0 ist, vorzugsweise beide 1 oder größer sind, und/oder ein oder mehrere Urethan(meth)acrylate beinhaltet.

10. Verwendung eines Kunstharz-Verklebungsmittels nach einem der Ansprüche 1 bis 7, **dadurch gekennzeichnet, dass** das oder die härtbaren Reaktivharz(e) auf Epoxidbasis in der Reaktiv-Kunstharzkomponente (A) als Epoxid Polyglycidylether von Novolak, Bisphenol F oder Bisphenol A, oder Gemische solcher Epoxide, vorzugsweise ganz oder teilweise biogener Art, beinhaltet oder beinhalten, bevorzugt mit oder ferner ohne einen reaktiven Verdünner, und in der Härterkomponente (B) als Härter solche mit zwei oder mehr Gruppen ausgewählt aus Amino, Imino, und Mercapto, beispielsweise entsprechende Amine oder Thiole, oder ferner Thioalkohole, Aminoalkohole oder Amino¬thiole, insbesondere ganz oder teilweise biobasierte Mannichbasenformulierungen, oder Gemische solcher Verbindungen, beinhaltet.

11. Verwendung eines Kunstharz-Verklebungsmittels nach einem der Ansprüche 1 bis 10, **dadurch gekennzeichnet, dass** das mehrkomponentige Kunstharz-Verklebungsmittel ein oder mehrere weitere Inhaltsstoffe, insbesondere ausgewählt aus aminischen Beschleunigern, Inhibitoren (vorzugsweise nur im Falle der radikalischen Reaktivharze), reaktiven Verdünnern, Thixotropiermitteln, weiteren Füllstoffen und ferner aus weiteren Inhaltsstoffen, wie ausgewählt aus Weichmachern, nicht reaktiven Verdünnungsmitteln, Flexibilisatoren, Stabilisatoren, Rheologiehilfsmitteln, Netz- und Dispergiermitteln und färbenden Zusätzen, beinhaltet.

12. Verwendung eines Kunstharz-Verklebungsmittels nach einem der Ansprüche 1 bis 12, **dadurch gekennzeichnet, dass** es sich bei dem mehrkomponentigen Kunstharz-Verklebungsmittel um ein Zwei-Komponenten-System handelt, insbesondere in Form einer Zwei-Kammer-Kartusche ohne oder mit Statikmischer.

13. Verwendung eines zwei- oder mehrkomponentigen Kunstharz-Verklebungsmittels, insbesondere in Form eines Injektionsmörtels, nach einem der Ansprüche 1 bis 12, beinhaltend
a.) ein härtbares Reaktivharz, insbesondere ein radikalisch härtbares Reaktivharz oder ein Reaktivharz auf Epoxidbasis;
b.) einen härtbaren Reaktivverdünner mit einer Viskosität < 800 mPa*s, messbar mit einem Brookfield-Viskosimeter bei 23 °C mit einer Spindel 3 bei 20 U/min;
c.) optional nicht härtbare Verdünner; und
d.) einen Härter, durch den a.) und b.) gehärtet werden bzw. durch den deren Härtung initiiert wird wobei, dass der Gehalt an biogenem Kohlenstoff > 20 %, insbesondere > 50 % ist, zum Einmör¬teln von Verankerungsmitteln in Löcher oder Spalten, bei dem das Kunstharz-Verklebungsmittel und ein Verankerungs-mittel in ein Loch oder einen Spalt eingebracht werden und das Kunstharz-Verklebungsmittel zum Aushärten gebracht wird.

14. Verwendung eines Kunstharz-Verklebungsmittels nach einem der Ansprüche 1 bis 13 zum Einmör¬teln von Verankerungsmitteln in Bohrlöchern, wie feuchten Bohrlöchern, bei dem das Kunstharz-Verklebungsmittel und ein Verankerungs-mittel in ein Bohrloch, auch in einem rissigen Substrat, wie rissigem Beton, eingebracht werden und das Kunstharz-Verklebungsmittel zum Aushärten gebracht wird.

## Claims

1. Use of a multi-component synthetic resin adhesive composition for the fixing sector for embedding an anchoring element in mortar in a hole or crevice, wherein the synthetic resin adhesive composition and an anchoring means are introduced into a hole or crevice, including in a cracked substrate, such as cracked concrete, and the synthetic resin adhesive composition is caused to cure, wherein the synthetic resin adhesive composition comprises reactive diluents and/or resins, and wherein the reactive diluent and/or the reactive resin comprise(s) at least one reactive diluent and/or reactive resin that is biogenic or has a biogenic content, selected from epoxidised soybean oil (meth)acrylate, 1,10-decanediol di(meth)acrylate, tetrahydrofuryl methacrylate, isobornyl methacrylate, sorbitol (meth)acrylate, (meth)acrylated fusel oil, purely biogenic glycerol tri(meth)acrylate and mixtures of two or more such at least partly biogenic reactive diluents and/or resins, wherein biogenic, a biogenic content or at least partly biogenic means that the reactive diluents or those "having biogenic content" have at least parts of their molecules obtained from plants or vegetable or animal materials, which can be detected with reference to ASTM 6866 by way of the ¹⁴C content.

2. Use of a multi-component synthetic resin adhesive composition according to claim 1, **characterised in that** the proportion of reactive diluent having biogenic content is from 0.5 to 80 % by weight, based on all components of the adhesive composition apart from the packaging.

3. Use of a multi-component synthetic resin adhesive composition according to either one of claims 1 and 2, wherein the proportion of biogenic carbon, determinable in accordance with the certification program for bio-based products according to ASTM 6866 by TUV Rheinland, based on the total formulation without packaging, is at least 20, > 50, at least 55, at least 60, at least 65, at least 75, at least 80 or > 85 % by weight.

4. Use of a multi-component synthetic resin adhesive composition according to any one of claims 1 to 3, **characterised in that** the multi-component synthetic resin adhesive composition is a two-component kit, having a reactive synthetic resin component (A) and a hardener component (B).

5. Use of a multi-component synthetic resin adhesive composition according to claim 4, **characterised in that** the multi-component synthetic resin adhesive composition comprises the content of reactive diluent having biogenic content in the synthetic resin component (A).

6. Use of a synthetic resin adhesive composition according to claim 4, **characterised in that** the multi-component synthetic resin adhesive composition comprises a hardener having biogenic content in the hardener component (B).

7. Use of a synthetic resin adhesive composition according to any one of claims 1 to 5, **characterised in that** the multi-component synthetic resin adhesive composition comprises, as a reactive synthetic resin component (A), a reactive synthetic resin based on epoxy or a free-radical-hardenable reactive synthetic resin, and also in each case a hardener component (B).

8. Use of a synthetic resin adhesive composition according to claim 7, **characterised in that** the multi-component synthetic resin adhesive composition comprises, as reactive synthetic resin component (A), a free-radical-hardenable reactive synthetic resin and, as hardener component (B), such a component having a peroxide as initiator.

9. Use of a synthetic resin adhesive composition according to claim 7, **characterised in that** the multi-component synthetic resin adhesive composition comprises, in the or a reactive synthetic resin component (A), epoxy(meth)acrylates of formula 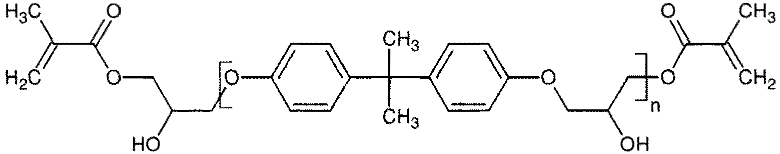 wherein n denotes a number greater than or equal to 1, and/or propoxylated or ethoxylated aromatic diol-(meth)acrylates of formula 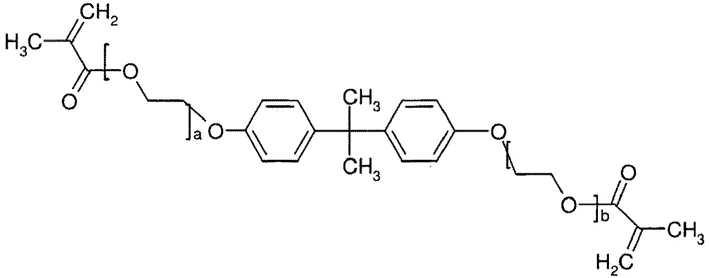 wherein a and b each independently of the other denote a number greater than or equal to 0, with the proviso that preferably at least one of the values is greater than 0, preferably both values being 1 or more, and/or one or more urethane (meth)acrylates.

10. Use of a synthetic resin adhesive composition according to any one of claims 1 to 7, **characterised in that** the hardenable reactive resin(s) based on epoxy in the reactive synthetic resin component (A) comprise(s), as epoxy, polyglycidyl ethers of novolak, bisphenol F or bisphenol A, or mixtures of such epoxides, preferably entirely or partly of biogenic nature, preferably with or furthermore without a reactive diluent, and, in the hardener component (B), as hardener, those having two or more groups selected from amino, imino and mercapto, for example corresponding amines or thiols, or furthermore thioalcohols, aminoalcohols or aminothiols, especially entirely or partly bio-based Mannich base formulations, or mixtures of such compounds.

11. Use of a synthetic resin adhesive composition according to any one of claims 1 to 10, **characterised in that** the multi-component synthetic resin adhesive composition comprises one or more further ingredients, especially selected from aminic accelerators, inhibitors (preferably only in the case of free-radical reactive resins), reactive diluents, thixotropic agents, further fillers and furthermore further ingredients, such as selected from plasticisers, non-reactive diluting agents, flexibilisers, stabilisers, rheology aids, wetting and dispersing agents and colouring additives.

12. Use of a synthetic resin adhesive composition according to any one of claims 1 to 12, **characterised in that** the multi-component synthetic resin adhesive composition is a two-component system, especially in the form of a two-chamber cartridge with or without a static mixer.

13. Use of a two-component or multi-component synthetic resin adhesive composition, especially in the form of an injectable mortar, according to any one of claims 1 to 12, comprising
a.) a hardenable reactive resin, especially a free-radical-hardenable reactive resin or a reactive resin based on epoxy;
b.) a hardenable reactive diluent having a viscosity < 800 mPa*s, measurable using a Brookfield viscometer at 23°C with a no. 3 spindle at 20 rpm;
c.) optionally, non-hardenable diluents; and
d.) a hardener, by means of which a.) and b.) are hardened and/or by means of which the hardening thereof is initiated, wherein the content of biogenic carbon is > 20 %, especially > 50 %, for embedding anchoring means in mortar in holes or crevices, in which the synthetic resin adhesive composition and an anchoring means are introduced into a hole or crevice and the synthetic resin adhesive composition is caused to cure.

14. Use of a synthetic resin adhesive composition according to any one of claims 1 to 13 for embedding anchoring means in mortar in drilled holes, such as moist drilled holes, in which the synthetic resin adhesive composition and an anchoring means are introduced into a drilled hole, including in a cracked substrate, such as cracked concrete, and the synthetic resin adhesive composition is caused to cure.

## Revendications

1. Utilisation d'un agent adhésif multicomposant à base de résine synthétique destiné à la zone de fixation pour coller au mortier un élément d'ancrage dans un trou ou une fente, l'agent adhésif à base de résine synthétique et un moyen d'ancrage étant introduits dans un trou ou une fente, également dans un substrat fissuré, tel que du béton fissuré, et l'agent adhésif à base de résine synthétique étant amené à durcir, l'agent adhésif à base de résine synthétique comprenant des diluants et/ou des résines réactifs, et le diluant réactif et/ou la résine réactive contenant au moins un diluant réactif et/ou une résine réactive qui est biogène ou comprend une fraction biogène, choisi parmi le (méth)acrylate d'huile de graines de soja époxydé, le di(méth)acrylate de 1,10-décanediol, le méthacrylate de tétrahydrofurfuryle, le méthacrylate d'isobornyle, le (méth)acrylate de sorbitol, l'huile de fusel (méth)acrylée, le tri(méth)acrylate de glycérine purement biogène et les mélanges de deux ou davantage de tels diluants et/ou résines réactifs au moins partiellement biogènes,
biogène, une fraction biogène ou au moins partiellement biogène signifiant que les diluants réactifs ou ceux « munis d'une fraction biogène » ont été obtenus au moins avec des parties de leur molécule issues de plantes ou de matériaux végétaux ou animaux, ce qui peut être attesté sur la base de l'ASTM6866 par l'intermédiaire de la teneur en 14C.

2. Utilisation d'un agent adhésif multicomposant à base de résine synthétique selon la revendication 1, **caractérisée en ce que** la fraction de diluant réactif muni d'une fraction biogène est de 0,5 à 80 % en poids, par rapport à tous les composants de l'agent adhésif en dehors de l'emballage.

3. Utilisation d'un agent adhésif multicomposant à base de résine synthétique selon l'une quelconque des revendications 1 ou 2, dans laquelle la fraction de carbone biogène, pouvant être déterminée par le programme de certification pour des produits biologiques selon l'ASTM 6866 de TÜV Rheinland, par rapport à la formulation totale sans emballage, est d'au moins 20, > 50, d'au moins 55, d'au moins 60, d'au moins 65, d'au moins 75, d'au moins 80 ou > 85 % en poids.

4. Utilisation d'un agent adhésif multicomposant à base de résine synthétique selon l'une quelconque des revendications 1 à 3, **caractérisée en ce que** l'agent adhésif multicomposant à base de résine synthétique consiste en un kit bicomposant, muni d'un composant résine synthétique réactive (A) et d'un composant durcisseur (B).

5. Utilisation d'un agent adhésif multicomposant à base de résine synthétique selon la revendication 4, **caractérisée en ce que** l'agent adhésif multicomposant à base de résine synthétique contient la fraction de diluant réactif muni d'une fraction biogène dans le composant résine synthétique (A).

6. Utilisation d'un agent adhésif à base de résine synthétique selon la revendication 4, **caractérisée en ce que** l'agent adhésif multicomposant à base de résine synthétique contient un durcisseur muni d'une fraction biogène dans le composant durcisseur (B).

7. Utilisation d'un agent adhésif à base de résine synthétique selon l'une quelconque des revendications 1 à 5, **caractérisée en ce que** l'agent adhésif multicomposant à base de résine synthétique contient en tant que composant résine synthétique réactive (A) une résine synthétique réactive à base d'époxyde ou une résine synthétique réactive durcissable par voie radicalaire, ainsi qu'à chaque fois un composant durcisseur (B).

8. Utilisation d'un agent adhésif à base de résine synthétique selon la revendication 7, **caractérisée en ce que** l'agent adhésif multicomposant à base de résine synthétique contient en tant que composant résine synthétique réactive (A) une résine synthétique réactive durcissable par voie radicalaire et en tant que composant durcisseur (B) un tel composant muni d'un peroxyde en tant qu'initiateur.

9. Utilisation d'un agent adhésif à base de résine synthétique selon la revendication 7, **caractérisée en ce que** l'agent adhésif multicomposant à base de résine synthétique contient dans le ou un composant résine synthétique réactive (A) des époxy(méth)acrylates de la formule : 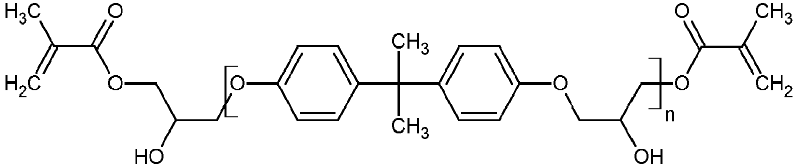 dans laquelle n représente un nombre supérieur ou égal à 1, et/ou des (méth)acrylates de diol aromatiques propoxylés ou éthoxylés de la formule : 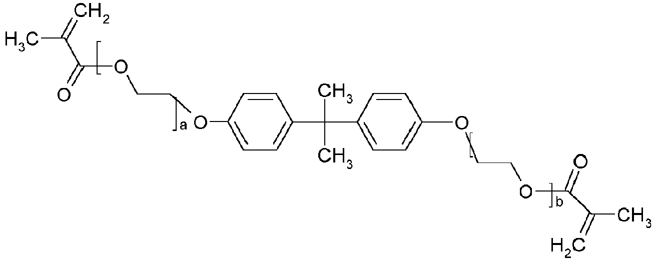 dans laquelle a et b représentent chacun indépendamment l'un de l'autre un nombre supérieur ou égal à 0, à condition que de préférence au moins une des valeurs soit supérieure à 0, que de préférence les deux valent 1 ou plus, et/ou un ou plusieurs (méth)acrylates d'uréthane.

10. Utilisation d'un agent adhésif à base de résine synthétique selon l'une quelconque des revendications 1 à 7, **caractérisée en ce que** la ou les résines réactives durcissables à base d'époxyde dans le composant résine synthétique réactive (A) contiennent en tant qu'époxyde de l'éther polyglycidylique de novolaque, du bisphénol F ou du bisphénol A, ou des mélanges de tels époxydes, de préférence en totalité ou en partie de type biogène, de préférence avec ou également sans un diluant réactif, et contiennent dans le composant durcisseur (B) en tant que durcisseur un tel durcisseur muni de deux ou davantage de groupes choisis parmi amino, imino et mercapto, par exemple des amines ou thiols correspondants, ou également des thioalcools, aminoalcools ou aminothiols, notamment des formulations de bases de Mannich entièrement ou partiellement biologiques, ou des mélanges de tels composés.

11. Utilisation d'un agent adhésif à base de résine synthétique selon l'une quelconque des revendications 1 à 10, **caractérisée en ce que** l'agent adhésif multicomposant à base de résine synthétique contient un ou plusieurs constituants supplémentaires, notamment choisis parmi les accélérateurs aminiques, les inhibiteurs (de préférence uniquement dans le cas des résines réactives radicalaires), les diluants réactifs, les agents thixotropiques, les charges supplémentaires et également parmi d'autres constituants, tels que choisis parmi les plastifiants, les diluants non réactifs, les flexibilisateurs, les stabilisateurs, les adjuvants de rhéologie, les agents mouillants et dispersants et les additifs colorants.

12. Utilisation d'un agent adhésif à base de résine synthétique selon l'une quelconque des revendications 1 à 12, **caractérisée en ce que** l'agent adhésif multicomposant à base de résine synthétique consiste en un système bicomposant, notamment sous la forme d'une cartouche à deux chambres sans ou avec un mélangeur statique.

13. Utilisation d'un agent adhésif bi- ou multicomposant à base de résine synthétique, notamment sous la forme d'un mortier d'injection, selon l'une quelconque des revendications 1 à 12, contenant :
a.) une résine réactive durcissable, notamment une résine réactive durcissable par voie radicalaire ou une résine réactive à base d'époxyde ;
b.) un diluant réactif durcissable ayant une viscosité < 800 mPa*s, mesurable avec un viscosimètre de Brookfield à 23 °C avec une broche 3 à 20 tours/minute ;
c.) éventuellement des diluants non durcissables ;
et
d.) un durcisseur, par lequel a.) et b.) sont durcis ou par lequel leur durcissement est initié, la teneur en carbone biogène étant > 20 %, notamment > 50 %, pour coller par mortier des moyens d'ancrage dans des trous ou des fentes, selon laquelle l'agent adhésif à base de résine synthétique et un moyen d'ancrage sont introduits dans un trou ou une fente, et l'agent adhésif à base de résine synthétique est amené à durcir.

14. Utilisation d'un agent adhésif à base de résine synthétique selon l'une quelconque des revendications 1 à 13 pour coller par mortier des moyens d'ancrage dans des trous de forage, tels que des trous de forage humides, selon laquelle l'agent adhésif à base de résine synthétique et un moyen d'ancrage sont introduits dans un trou de forage, également dans un substrat fissuré, tel que du béton fissuré, et l'agent adhésif à base de résine synthétique est amené à durcir.
